# EUROPEAN PATENT SPECIFICATION

(11) **EP 2 093 928 B1**
(45) Date of publication and mention of the grant of the patent: **13.04.2011**
(21) Application number: 09005810.8
(22) Date of filing: 20.10.2000
(51) Int. Cl.: H04L 12/00

(54) **System and method for providing dynamic network authorization, authentication and accounting**
System und Verfahren zur Bereitstellung dynamischer Netzautorisierung, -authentifizierung und -abrechnung
Système et procédé pour fournir une autorisation de réseau dynamique, authentification et comptabilité

(30) Priority: 22.10.1999 US 161093 P; 22.10.1999 US 161181 P; 22.10.1999 US 161182 P; 22.10.1999 US 160890 P; 22.10.1999 US 161139 P; 22.10.1999 US 161189 P; 22.10.1999 US 160973 P; 08.12.1999 US 458602; 08.12.1999 US 458569
(43) Date of publication of application: 26.08.2009
(62) Divisional of application: 00973771.9
(73) Proprietor: Nomadix, Inc., Newbury Park CA 91320 (US)
(72) Inventor: Short, Joel E., Los Angeles California 90049 (US); Pagan, Florence C. I., Los Angeles California 90025 (US); Goldstein, Josh J., Agoura Hills California 91301 (US)
(74) Representative: Ribeiro, James Michael

(56) References cited:
- EP-A- 0 762 707
- EP-A- 0 909 073
- US-A- 5 950 195

## Description

The present invention relates generally to systems and methods for controlling
network access, and more particularly, to systems and methods for establishing dynamic user network access.

### BACKGROUND OF THE INVENTION

User access to computer networks has traditionally been based upon a two step authentication process that either provides a user total network access, or refuses the user any access whatsoever. In the first step of the process, a user establishes a communication link with a network via a telephone line, dedicated network connection (e.g., Broadband, Digital Signal Line (DSL)), or the like. In the second step of the authentication process, the user must input identification information to gain access to the network. Typically, the input identification information includes a user name and password. Using this information, the network or service provider verifies that the user is entitled to access the network by determining whether the identification information matches subscriber information contained in a subscriber table (or database) that stores identification information for all users authorized to access the network. Where user input information matches subscriber data in the subscriber table, the user is authorized to access any and all services on the network. On the other hand, if the user input identification information fails to match subscriber data in the table, the user will be denied access to the network. Thus, once a user's identity is compared to data stored within a subscription table, the user is either entitled network access, or denied access altogether. Furthermore, where the user is authorized access to the network, the user is typically authorized to access any destination accessible via the network. Therefore, conventional authentication of users is based on an all-or-nothing approach to network access.

In many conventional network access applications, such as in conventional Internet access applications, the subscriber database (or table) not only stores data corresponding to the identity of subscribers authorized to access the network, but also stores information that can vary based upon the particular subscriber. For instance, the subscriber database can include subscriber profiles that indicate the type of access a subscriber should receive, and other related information, such as the fees due by the subscriber for network access. Although information in the subscriber database may vary from user to user, information unique to the database is generally used for billing or network maintenance purposes. For instance, conventional subscriber databases typically include data such as the cost the subscriber is paying for network access, and the amount of time the subscriber has accessed the network. Thus, where a subscriber to an Internet Service Provider (ISP) has purchased Internet access, a source profile database may contain information that enables a user to be authenticated and tracks the user's access for accounting purposes, such as maintaining a log of the user's time on the network.

Additionally, in conventional network access systems, in order for a user to connect to on-line services (e.g., the Internet), the user must install client side software onto the user's computer. Client side software is typically provided by a network administrator or network access provider, such as an ISP with whom the user has subscribed for Internet access, and enables the client to configure his or her computer to communicate with that network access provider. Continuing with the illustrative example of a user accessing the Internet via an ISP, the user must install ISP software on the client computer, and thereafter establish an account with the ISP for Internet access. Typically, a user subscribes to an ISP, such as America Online™, Earthlink™, Compuserve™ or the like, by contracting directly with the ISP for Internet access. Usually, the user pays for such Internet access on a monthly fixed fee basis. Regardless of the user's location, the user may dial up an access number provided by the ISP and obtain Internet access. The connection is often achieved via a conventional telephone modem, cable modem, DSL connection, or the like.

Because users accessing networks through conventional methods, such as through ISPs, are either allowed or denied access to a network in an all or nothing approach, users cannot be dynamically authorized access to a network such that the user's access and authorization to particular networks or sites is customizable. What is needed is a method and system that allows users dynamic and customizable access that may vary based upon any number of variables associated with a user, such as a user location, user name or password, user computer, or other attributes. For example, it would be advantageous for some users to be authorized access to all Internet sites, while others may be denied access to particular sites. In addition to authorizing user access to a network, it would be advantageous for a network, such as an ISP or enterprise network, to selectively permit users a range of authorization, such that the user's access is not based upon an all or nothing approach.

US-A-5950195 discloses a method to determine access rights based on access control lists, and in which packets are transmitted through a firewall. Initial connections are screened, and if authentication is needed, a prompt for a user name is presented, and the user name is used to perform an access control list check.

EP-A-0909073 discloses techniques for implementing computer network firewalls. The firewall receives packets and applies rules corresponding to each packet based upon incoming and outgoing network interfaces, network source and destination addresses, and type of service.

EP-A-0762707 discloses a check/control for access to IP networks via a telecommunications network. A filter allows initial access to a check/control server which in turn has command of blocking functions for access to the I.P.network.

### SUMMARY OF THE INVENTION

The present invention includes a method and system for selectively implementing and enforcing Authentication, Authorization and Accounting (AAA) of users accessing a network via a gateway device. According to the present invention, a user may first be authenticated to determine the identity of the user. The authentication capability of the system and method of the present invention can be based upon a user ID, computer, location, or one or more additional attributes identifying a source (e.g., a particular user, computer or location) requesting network access. Once authenticated, an authorization capability of the system and method of the present invention is customized based upon the identity of the source, such that sources have different access rights based upon their identity, and the content and/or destination requested. For instance, access rights permit a first source to access a particular Internet destination address, while refusing a second source access to that same address. In addition, the authorization capability of the system and method of the present invention can be based upon the other information contained in the data transmission, such as a destination port, Internet address, TCP port, network, or similar destination address. Moreover, the AAA of the present invention can be based upon the content type or protocol being transmitted. By authenticating users in this manner, each packet can be filtered through the selective AAA process, so that a user can be identified and authorized access to a particular destination. Thus, each time the user attempts to access a different destination, the user is subject to the AAA, so that the user may be prevented access from a particular site the AAA system and method deem inaccessible to the user based upon the user's authorization while permitting access to other sites that the AAA method and system deem accessible. Additionally, according to one embodiment of the invention, source access to the network may be tracked and logged by the present invention for accounting and historical purposes.

According to one embodiment of the invention, there is disclosed a method for selectably controlling and customizing source access to a network, wherein the source is associated with a source computer, and wherein the source computer has transparent access to the network via a gateway device and no configuration software need be installed on the source computer to access the network. The method includes receiving at the gateway device a request from the source computer for access to the network, identifying an attribute associated with the source based upon a packet transmitted from the source computer and received by the gateway device, and accessing a source profile corresponding to the source and stored in a source profile database, wherein the source profile is accessed based upon the attribute, and wherein the source profile database is located external to the gateway device and in communication with the gateway device. The method also includes determining the access rights of the source based upon the source profile, wherein access rights define the rights of the source to access the network.

According to one aspect of the invention, determining the access rights of the source based upon the source profile includes determining the access rights of the source based upon the source profile, wherein the access rights define the rights of the source to access a requested network destination. According to another aspect of the invention, the method includes assigning a location identifier to the location from which requests for access to the network are transmitted, and the location identifier is the attribute associated with the source. Furthermore, according to the invention, accessing a source profile corresponding to the source can include accessing a source profile stored in a source profile database, where the source profile database includes a remote authentication dial-in user service (RADIUS), or a lightweight directory access protocol (LDAP) database.

According to yet another aspect of the invention, the method includes updating the source profile database when a new source accesses the network. Additionally, the method can include maintaining in the source profile database a historical log of the source's access to the network. Moreover, the attribute associated with the source can be based upon a MAC address, User ID or VLAN ID associated with the source computer from which the request for access to the network was transmitted. According to yet another aspect of the invention, receiving at the gateway device a request from a source for access can include the step of receiving a destination address from the source.

According to another embodiment of the invention, there is disclosed a system for selectably controlling and customizing access, to a network, by a source, where the source is associated with a source computer, and wherein the source computer has transparent access to the network via a gateway device and no configuration software need be installed on the source computer to access the network. The system includes a gateway device for receiving a request from the source for access to the network, and a source profile database in communication with the gateway device and located external to the gateway device, wherein the source profile database stores access information identifiable by an attribute associated with the source, and wherein the attribute is identified based upon a data packet transmitted from the source computer and received by the gateway device. The system also includes a AAA server in communication with the gateway device and source profile database, wherein the AAA server determines if the source is entitled to access the network based upon the access information stored within the source profile database, and wherein the AAA server determines the access rights of the source with the access rights defining the rights of the source to access destination sites via the network.

According to one aspect of the invention, the packet received by the gateway device includes at least one of VLAN ID, a circuit ID, and a MAC address. Additionally, according to another aspect of the invention, the source profile database includes a remote authentication dial-in user service (RADIUS) or a lightweight directory access protocol (LDAP) database. Furthermore, the source profile database can include a plurality of source profiles, wherein each respective source profile of the plurality of source profiles contains access information. According to the invention, each respective source profile can also contain historical data relating to the duration of network access for use in determining the charges due for the network access. According to yet another aspect of the invention, the source profile database can be located within the AAA server.

According to another embodiment of the present invention, there is disclosed a method for redirecting a source attempting to access a destination through a gateway device, wherein source is associated with a source computer, and wherein the gateway device enables the source to communicate with a network without requiring the source computer to include network software configured for the network. The method includes receiving at the gateway device a request from the source to access the network, identifying the source based upon an attribute associated with the source, and accessing a source profile database located external to the gateway device, where the source profile database stores access rights of the source. The method further includes determining the access rights of the source based upon the identification of the source, wherein the access rights define the rights of the source to access destination sites via the network.

According to one aspect of the invention, accessing a source profile database includes accessing a source profile database that includes a remote authentication dial-in user service (RADIUS), or a lightweight directory access protocol (LDAP) database. According to another aspect of the invention, the method can include assigning a location identifier to the location from which requests for access to the network are transmitted, wherein the location identifier is the attribute associated with the source. The method can also include updating the source profile database when a new source accesses the network, and maintaining in an accounting database a historical log of the source's access to the network, wherein the accounting database is in communication with the source profile database.

According to yet another aspect of the invention, receiving at the gateway device a request from a source for access can include the step of receiving a destination address from the source. Moreover, determining if the source computer is entitled to access the destination address can further include denying the source computer access where the source profile indicates that the source computer is denied access. Determining if the source is entitled to access the network can also further include directing the source to a login page when the source profile is not located within the source profile database.

According to yet another embodiment of the invention, there is disclosed a system for enabling transparent communication between a computer and a service provider network. The system includes a computer, and a network gateway device in communication with the computer for connecting the computer to a computer network, where the network gateway device receives source data that represents a user attempting to access said computer network. The system also includes a service provider network in communication with the network gateway device, where the service provider network includes an authentication server located external to the network gateway device and in communication with the network gateway device. The authentication server has therein a source profile database comprising source profiles that represent users authorized to access said computer network, and compares the source data to said source profiles to determine if the user attempting to access the computer network can access the computer network.

According to one aspect of the invention, the system can include an accounting system for maintaining historical data concerning use of the service provider network. According to another aspect of the invention, the authentication server includes a remote authentication dial-in user service (RADIUS), or a lightweight directory access protocol (LDAP) database. Furthermore, the source profile database can include a plurality of source profiles, where each respective source profile of the plurality of source profiles contains access information. According to yet another aspect of the invention, the source data includes an attribute associated with the computer and transmitted from the computer to the gateway device. According to anther aspect of the invention, the source data includes login information associated with a respective user.

The Authentication, Authorization and Accounting method and system according to the present invention enable users transparent access to a computer network employing a gateway device. Therefore, each user may have differing rights to access services, sites or destinations via the network. Thus, the present invention differs from conventional AAA methods and systems by offering dynamic AAA services which authenticate users and offer those users varying degrees of authorization to utilize the accessed network. Furthermore, the source profile database of the present invention can be located external to the gateway device, and on a network non-local to the network from which access is requested. An external source profile database is desirable because each gateway device allows a finite number of users to access the network, so that multiple gateway devices may be required. Additionally, administering and maintaining one consolidated database of authentication data is easier than multiple smaller databases. Moreover, locating the database external to the local network allows an ISP or third party provider to maintain the confidentiality of the information stored within the database and maintain and control the database in any manner the third party provider so desires.

### BRIEF DESCRIPTION OF THE DRAWINGS

FIG. 1 is a block diagram of a computer system that includes a AAA server for authenticating, authorizing and accounting sources accessing networks and/or online services, according to one embodiment of the present invention.
FIG. 2 is a flow chart of a method in which a AAA server performs authentication, authorization, and accounting, according to one aspect of the invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

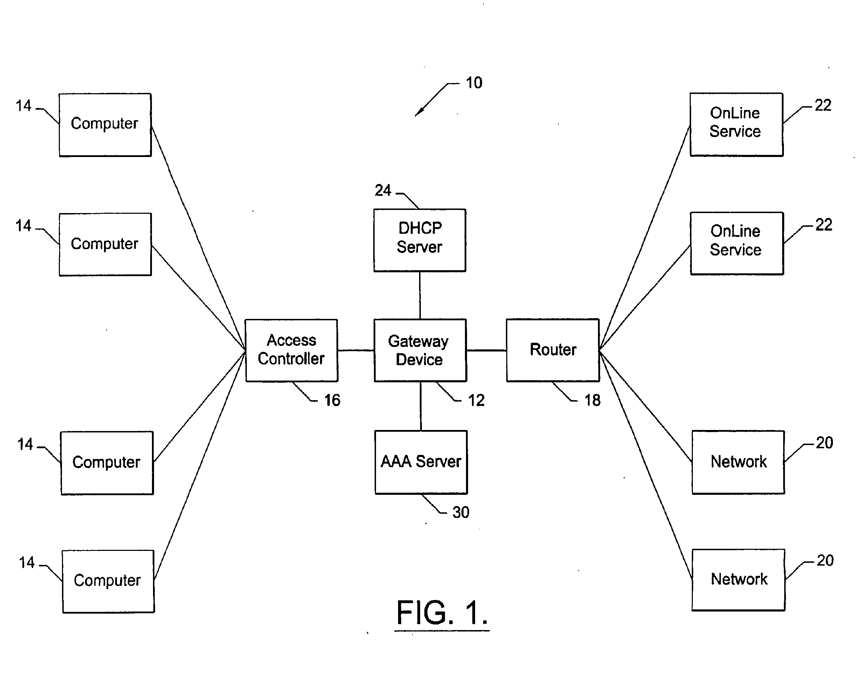

Referring now to FIG. 1, a computer system **10** is illustrated in block diagram form. The computer system **10** includes a plurality of computers **14** that can communicate with one or more online services **22** or networks via a gateway device **12** providing the interface between the computers **14** and the various networks **20** or online services **22.** One embodiment of such a gateway device has been described in U.S.-A-61308892.

Briefly, the gateway device **12** facilitates transparent computer **14** access to the online services **22** or networks **22,** such that the computers **14** can access any networks via the device **12** regardless of their network configurations. Additionally, the gateway device **12** includes the ability to recognize computers attempting to access a network **12,** the location of computers attempting to access a network, the identity of users attempting to gain network access, and additional attributes, as will be discussed below with respect to the dynamic AAA methods and systems of the present invention.

As illustrated in FIG. 1, the computer system **10** also includes an access concentrator **16** positioned between the computers **14** and the gateway device **12** for multiplexing the signals received from the plurality of computers onto a link to the gateway device **12.** Depending upon the medium by which the computers **14** are connected to the access concentrator, the access concentrator **16** can be configured in different manners. For example, the access concentrator can be a digital subscriber line access multiplexer (DSLAM) for signals transmitted via regular telephone lines, a cable head end (a Cable Modem Termination Shelf (CMTS)) for signals transmitted via coaxial cables, a wireless access point (WAP) for signals transmitted via a wireless network, a switch, or the like.

The computer system **10** further includes a AAA server **30** that dynamically authenticates and authorizes user access, as explained in detail below, such that users are subjected to a AAA process upon attempting to gain access to a network through the gateway device **12.** Finally, as is shown in FIG. 1, the computer system **10** typically includes one or more routers **18** and/or servers (not shown in FIG. 1) to control or direct traffic to and from a plurality of computer networks **20** or other online services **22.** While the computer system **10** is depicted to have a single router, the computer system **10** can have a plurality of routers, switches, bridges, or the like that are arranged in some hierarchical fashion in order to appropriately route traffic to and from the various networks **20** or online services **22.** In this regard, the gateway device **12** typically establishes a link with one or more routers. The routers, in turn, establish links with the servers of the networks **20** or online services **22,** based upon the user's selection. It will be appreciated by one of ordinary skill in the art that one or more devices illustrated in FIG. 1 may be combinable. For example, although not shown, the router **18** may be located entirely within the gateway device **12.**

Users and computers attempting to access a network **20** or online service **22** via the gateway device **12** are referred to hereinafter as sources. According to AAA methods and systems of the present invention, a source attempting to access a network via the gateway device **12** is authenticated based on attributes associated therewith. These attributes can include the identity of a particular user or computer, location through which access is requested, requested network or destination, and the like. As is explained in detail in US-A-6130892, these attributes are identified by data packets transmitted to the gateway device **12** from the computers through which access is requested. According to one embodiment, methods and systems of the present invention provide dynamic authentication, authorization and accounting based upon these attributes. Generally, as used herein authentication refers to the identification of the source, authorization refers to the determination of permittable source access, and accounting refers to the tracking of a source's access to a network.

Referring now to the authentication function of systems and methods of present invention, it will be appreciated that authenticating a source attempting to access the network is often crucial to network administration, as network access and services are not typically laid open for all users regardless of identity or payment. As stated above, a source may be identified by the gateway device **12** by one or more attributes contained within data packets transmitted to the device from the computer associated with the source attempting to access a network or service, referred to hereinafter as the source computer. For instance, where the source is a user, the source computer is the computer through which the user is attempting to access a network or network destination. On the other hand, where the source is a computer through which one or more user may request access to a network, the source computer is that computer through which access is requested.

According to one aspect of the invention, a source computer attempting to access a network via the gateway device **12** may be identified one or more attributes that include a circuit ID, MAC address, user name, ID and/or password, or particular location (e.g., a communications port in a hotel room), or the like, transmitted to the gateway device **12** via data packets generated by the source computer, as described in U.S. -A-2006/0239254.

It will be appreciated that one or more of these attributes can be used in the present invention to identify the source accessing the network. By means of an illustrative example, where sources are different users haying dissimilar authentication and authorization rights, the users may identify themselves by their respective login information (e.g., user name and password) such that they will be independently identified despite the use of the same equipment, such as the same computer. On the other hand, where the source is a computer, diverse users using the computer will have like authentication and authorization rights regardless of the individual rights of each user, as the rights are associated with the computer (e.g., identified by MAC address), rather than with the respective users.

The authentication of sources via an attribute associated with the source is performed by the AAA server **30,** illustrated in FIG. 1. The AAA server **30** stores source profiles corresponding to sources identified by the AAA server **30.** According to one aspect of the present invention, the AAA server **30** is located entirely within the gateway device **12.** According to another aspect of the invention, the AAA server **30** can comprise a plurality of components, at least some of which are external to the gateway device **12,** or alternatively, the AAA server **30** can be located entirely external to the gateway device **12.** For example, the location of the AAA server **30** may be such that the gateway device **12** communicates with the AAA server **30** via internet protocol. According to one embodiment of the invention, the AAA server **30** can be maintained by an ISP, which identifies sources authorized to communicate with the network via the ISP. Therefore, it will be appreciated that the AAA server **30** may be located at any internet address and stored on any computer accessible via internet protocol.

According to one aspect of the invention, a separate source profile exists for each source accessing the system. Source profiles are maintained in a source profile database, which may be an internal component of the AAA server **30,** an external component of the AAA server **30,** or a separate component in communication with the AAA server **30.** Preferably, the source profile database is located external to the gateway device and network to alleviate administrative burden on the network so that the network does not have to set up and maintain separate authentication databases on each network or gateway device. This is also preferable because each gateway device **12** allows a finite number of users to access the network, which requires multiple gateway devices to accommodate a large number of sources. Secondly, administering and maintaining one consolidated database of authentication data is easier than multiple smaller databases. Lastly, locating the source profile database external to the local network can allow an ISP or third party provider to maintain the confidentiality of the information stored within the database and maintain and control the database in any manner the third party provider so desires.

The source profile includes one or more names, passwords, addresses, VLAN tags, MAC addresses and other information pertinent to identify, and, if so desired, bill, a source. Upon a source's attempt to access a network via the gateway device **12,** the AAA server **30** attempts to authenticate the source by comparing stored source profiles in the source profile database with the attributes received from the gateway device **12** or source to determine the source identity. As an illustrative example, where a user attempts to access the network by entering a user ID and password, the user ID and password are compared against all IDs and passwords stored in the source profile database to determine the identity of the user. As such, the source profile database generally comprises a database or data storage means in communication with processing means located within the AAA server **30** or gateway device **12,** where the source profile database and processor work in conjunction to compare received attributes to stored source profile information, as is well known in the art.

The source profile database may comprise programmable storage hardware or like means located on a conventional personal computer, mainframe computer, or another suitable storage device known in the art. Additionally, the means for comparing the received data to the data within the database can comprise any software, such as an executable software program, which can compare data. For example, the AAA server **30** may store source profiles on a hard drive of a personal computer, and the means for comparing the received source data to the source profiles resident on the computer can include computer software, such as Microsoft Excel (Microsoft Excel is a trademark of Microsoft Corporation, Redmond, Washington). According to another embodiment of the invention, the AAA server **30** or source profile database can comprise a Remote Authentication Dial-In User Service (RADIUS) or a Lightweight Directory Access Protocol (LDAP) database, which are well known to those of skill in the art.

If a source fails to correspond to a source profile in the AAA server **30** at the time of authentication, the source will not be permitted access to the network. When this occurs, a user or user associated with a non-user source may be requested to input source profile information to the AAA server **30** so that the AAA server **30** can add the source's profile to the AAA server **30,** and more specifically, to the source profile database. For example, this may occur the first time a user attempts to access the gateway device **12.** According to another aspect of the invention, where the source cannot be identified, the source may be directed to a login page in order to gather additional information to identify the source. For instance, the information may be entered with the aid of a webpage, a pop-up control panel or user interface, which can open when the source initially connects to the gateway device **12,** as effectuated by a home page redirection capability, described herein and in U.S. - A - 6 6 36894.

According to one aspect of the invention, the AAA server **30** can identify the source in communication with the gateway device in a manner that is transparent to computer users. That is, according to one aspect of the invention, a user will not be required to input identification information, reconfigure the source computer or otherwise change the source computer's primary network settings: Furthermore, no additional configuration software will have to be added to the source computer. After a packet is received by the gateway device, attributes identified by the data packet can be compared with the data contained in the source profile database. Therefore, in addition to not requiring the reconfiguration of computers accessing the network, AAA servers of the present invention have the ability to authenticate sources without requiring interactive steps by the computer user, such as the entering of a user ID. For instance, the AAA server 30 may automatically identify the source based upon a MAC address, so that authorization of the source can be readily determined. Therefore, it will be appreciated that the AAA server **30** can determine the user, computer, or location from which access is requested by comparing the attributes associated with the received data packet (such as in a header of the data packet) with data drawn from the source profile database. As will be described below, the access rights associated with the source may also be stored within the source profile database so that the system and method of the present invention can dynamically authorize access to particular services or destinations.

Once the source has established the network service connection via the authentication process discussed above, and a tunnel has been opened to facilitate a communication line between the source computer and a network, the gateway device **12** communicates with the AAA server **30** to assemble source profile information, or source-specific data. The source profile information that the gateway device assembles may include a MAC address, name or ID, circuit ID, billing scheme related data, service level data, user profile data, remote-site related data, and like data related to the source. As such, the AAA server **30** can transmit to the gateway device **12** any requisite information relating to the source's authorization rights and use of the network, as is next explained in detail.

In addition to authenticating users, the AAA server **30** of the present invention provides an authorization function, in which the source access rights are determined. The present invention enables dynamic authorization of sources, such that each source might have different respective network usage or access rights. After authentication, the AAA server **30** compares the attributes of the source with the access rights of the source associated with the user, computer, location or attribute(s). The access rights may be stored within the source profile database or within a separate subscription database located internal or external to the gateway device **12.** Therefore, separate databases may be utilized, where one stores identification information on sources for authentication, and another database stores the access rights of those sources that have been authenticated. However, because the profiles of all sources, identified by attribute or a combination of attributes, are stored in a source profile database, it may be advantageous to locate information regarding access rights in the source profile database, which already contains information regarding each authenticated source, as described above.

According to one aspect of the invention the source profile database stores information defining the access rights of a source. For example, a source profile database may contain information indicating that a source having a particular MAC address has purchased pre-paid access, or that a given circuit ID has free access or unlimited access. Guests in a particular room or rooms of a hotel, for example, suites and penthouses, may receive free unlimited Internet access. Therefore, access rights can be available contingent upon the source's location (e.g. room) or location status (e.g. suite). In this event, no further identification is required, as the location from which the source is requesting access is known to the gateway device and stored in the source profile database.

In addition to storing information concerning what each source is authorized to access, the source profile database can also include specialized access information associated with a particular source, such as the bandwidth of the source's access, or a homepage to which the source should be directed. For example, a user accessing the network from a penthouse may receive a higher access baud rate than someone accessing the network from a typical hotel room. For example, where a user is transparently accessing the gateway device from a hotel room, the hotel network administrator may enter user access information into the source profile database based upon access rights associated with a room in the hotel. This can also be done automatically by the gateway device or a local management system, such as a hotel property management system, when the user checks into his or her room. Additionally, the user may establish the information to be contained within the source profile database upon first accessing the gateway device. For instance, a new user may be directed to enter a credit card number, e-wallet account information, pre-paid calling card number or like billing information to obtain access to the system. A source profile can also include historical data relating to a source's access to the network, including the amount of time a source has accessed the network. Specialized access or accounting information contained within the source profile database may be established by the system administrator, or by the source who has purchased or otherwise established access to the network.

According to one aspect of the invention, the authorization capability of the AAA server **30** can be based upon the type of services the source is attempting to access, such as a destination address, identified by the gateway device 12 based upon data received from the source computer. The destination can be a destination port, Internet address, TCP port, network, or the like. Moreover, the authorization capability of the AAA server **30** can be based upon the content type or protocol being transmitted. According to the system and method of the present invention, each packet can be filtered through the selective AAA process, so that any or all sources can be authorized access to a particular destination based on the access rights associated with the respective sources. Therefore, according to the present invention, each time the source attempts to access a different destination, the source is subject to the AAA, so the source may be prevented access from a particular site the AAA server **30** deems inaccessible to the source based upon the source's authorization. Alternatively, the AAA method according to the present invention allows some or all sources to connect directly to a specific site, such as credit card or billing servers for collecting billing information, which can collect payment or billing information so that the source profile can be updated and the source thereafter authorized access to networks. According to the system and method of the present invention, a source's authorization can also depend upon objective criteria, such as a specific time, so that the session can be terminated at a specific time, after a specific time has elapsed, or according to other dynamic information determined by the network provider. Furthermore, authorization can be associated with a combination of attributes. For example, a user may be authorized access to a network where the user has input the user's identification and has accessed the network from a particular room. Such a requirement could prevent unauthorized users also staying in a particular room from obtaining network access. Therefore, AAA can be based upon the origination, destination, and type of traffic.

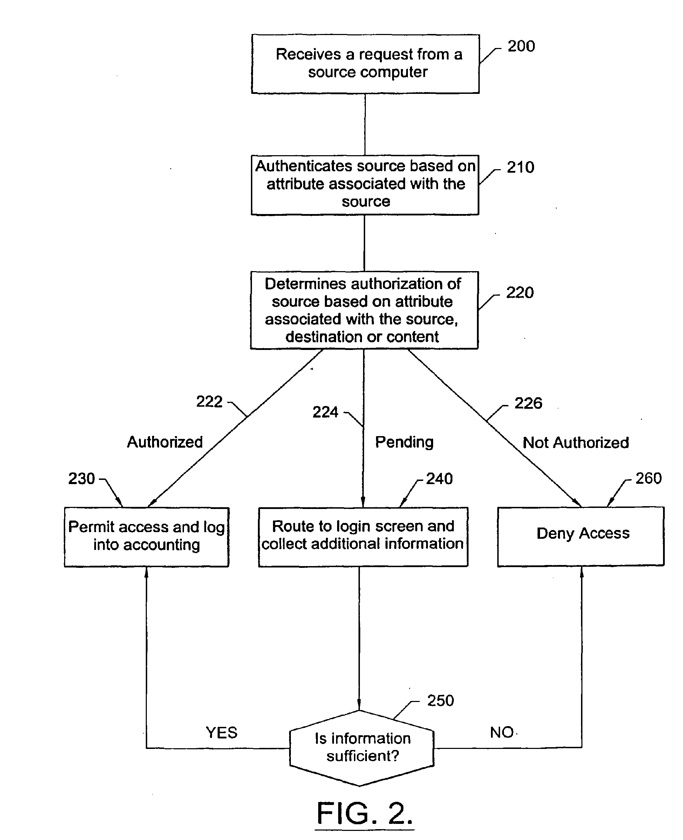

By way of further explanation, a flow chart of the operation of the AAA server 30 will be described with respect to FIG. 2, according to one aspect of the invention. In operation, a source computer requests (block **200**) access to a network, destination, service, or the like. Upon receiving a packet transmitted to the AAA server **30,** the AAA server **30** examines the packet to determine the identity of the source (block **210**). The attributes transmitted via the packet are temporarily stored in the source profile database so that the data can be examined for use in determining authorization rights of the source. The attributes contained in the packet can include network information, source IP address, source port, link layer information, source MAC address, VLAN tag, circuit ID, destination IP address, destination port, protocol type, packet type, and the like. After this information is identified and stored, access requested from a source is matched against the authorization of that source (block **230**).

Once a source profile has been determined by accessing the authorization rights stored in the source profile database, three possible actions can result. Specifically, once a source's authorization rights have been retrieved the AAA server **30** may determine a source to have access **222**, to be pending or in progress **224**, or to not have access **226.** First, a source is deemed valid (i.e., to have access) where the source profile database so states. If a source is determined to be valid, the source's traffic can be allowed to proceed out of the gateway device to the networks or online services the user associated with the source wishes to access (block **230**). Alternatively, the source may be redirected to a portal page, as described in the Redirecting Application, prior to being allowed access to the requested network. For example, a user may be automatically forwarded to a user-input destination address, such as an Internet address, for example, where a user has free access associated with the user's hotel room. Alternatively, this may occur where the user has already purchased access and the user has not exhausted available access time. Furthermore, an accounting message may be initiated 230 to log the amount of time the user is utilizing the gateway device such that the user or location may be billed for access.

If the second scenario occurs, in which the source is deemed pending **224** or in progress, the source may take steps to become authenticated (block **240**) so that the source information is recorded in the source profile database. For example, a user may have to enter into a purchase agreement, requiring the user to enter a credit card number. If the user needs to purchase access, or if the system needs additional information about the user, the user can be redirected from the portal page via Home Page Redirect (HPR) and Stack Address Translation (SAT) to a location, such as a login page, established to validate new users. SAT and HPR can intervene to direct the user to a webserver (external or internal) where the user has to login and identify themselves. This process is described in detail in the Redirecting Application. After inputting any necessary and sufficient information, the user is then be permitted access to a destination address (block **230, 250**). Where the information provided is insufficient the user will not be authorized access (block **260).** Finally, a third scenario can occur in which a source is deemed not to have access **226** so that the user is not permitted to access a destination via the network (block **260**).

Referring now to the accounting function of systems and methods of the present invention, upon authorizing a source network access, the AAA server **30** can register an accounting start to identify that the source is accessing the network. Similarly, when the source logs off or terminated the network session, an accounting stop can be registered by the AAA server **30.** Accounting starts or stops can be identified by the gateway device **12** or by the AAA server **30** upon a source's authentication or authorization to access a desired destination. Furthermore, accounting starts or stops can be registered in the source profile, or can be stored in a database separate from the AAA server **30** and located external to the network. Typically, accounting starts and stops include time stamps that indicate the amount of time a source has been accessing the network. Using this data, the time between the accounting start and accounting stop can be tallied so that the source's total connection time may be computed. Such information is valuable where the source is charged by an increment of time, such as an hour. A billing package, as are well known in the art, could then tally a user's total time accessing the network over a set period, such as each month, so that a bill can be created for the source. Because networks and ISPs often may charge a set rate for a specific duration of time (i.e., flat rate pricing), such as a month, regardless how much time is being spent accessing the network, accounting stops and starts may not be required for billing purposes. Nevertheless, accounting starts and stops may generally be recorded by the network provider or ISP for usage statistics.

An ISP or similar access provider would additionally benefit from being able to track subscriber's use of the ISP to establish bills, historical reports, and other relevant information. Preferably, the AAA server **30** is in communication with one or more processors for determining any fees which may be charged to the source, or due from the source, for network access or services. The AAA server **30** retrieves the historical accounting data in a real time basis or after a specific interval of time has elapsed. Preferably, the AAA server **30** retains such data in an easily accessible and manipulatable format such that the access provider (e.g., ISP) can produce reports representative of any desired type of historical data. For example, to project future use of the access provider, the AAA server **30** produces reports tallying the number of users accessing the Internet at certain time periods and from specific locales. Moreover, where the access provider provides alternative access to users, such as charging for faster connections (i.e., higher baud rate) for additional fees, the access provider may wish to analyze historical data using the AAA server **30** to best meet future customer demands. Such data may relate to network sessions currently on-going, the duration of those sessions, the bandwidth currently being used, the number of bytes that have been transferred and any other pertinent information. The AAA server **30** may be implemented using well known programs, such as Eclipse Internet Billing System, Kenan Broadband Internet Billing Software (manufactured by Lucent Technologies), or TRU RADIUS Accountant.

It will be appreciated that the AAA server **30** can dynamically account source access to a network in the same manner in which access is customizable on a source by source basis. That is, the AAA server **30** can maintain accounting records that vary depending upon the identity of a source, source location, source requested destination, or the like. Like the access or authorization rights, this information can be maintained in the source profile database or a similar accounting database. For instance, the AAA server **30** may determine that a particular source is only charged for accessing particular sites, and will only register an accounting site when those particular sites are accessed. Therefore, the AAA server **30** will identify account information stored in the subscriber's source profile to determine accounting starts, accounting stops, billing rates, and the like.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for controlling access to a network, comprising:
receiving at a gateway device (12) a request from a source computer (14) for access to a computer network (20);
enabling, via the gateway device, the source computer (14) to access the computer network (20);
receiving, at the gateway device (12), a packet transmitted from the source computer (14);
**characterised in that** the method further comprises:
determining a location of the source computer (14) by comparing attributes associated with the packet with data drawn from a source profile database; and
determining access rights of the source computer (14) based at least upon the determined location of the source computer, wherein the access rights define rights of the source computer (14) to access a requested network destination on the computer network (20), the access rights being determined without requiring interactive steps by a computer user.

2. The method of claim 1, wherein the location is a room in a hotel.

3. The method of claim 1, wherein determining a location of the source computer (14) comprises accessing a remote authentication dial-in user service (RADIUS).

4. The method of claim 1, wherein determining a location of the source computer (14) comprises accessing a lightweight directory access protocol (LDAP) database.

5. The method of claim 1, further comprising updating the source profile database when a new source accesses the computer network (20).

6. The method of claim 1, further comprising maintaining in the source profile database a historical log of the source computer (14)'s access to the computer network (20).

7. The method of claim 1, further comprising redirecting the source computer to a portal page prior to the source computer being allowed access to the requested network

8. A system for controlling access to a network, comprising:
means for receiving at a gateway device (12) a request from a source computer (14) for access to a computer network (20);
means for enabling, via the gateway device, the source computer (14) to access the computer network (20);
means for receiving, at the gateway device (12), a packet transmitted from the source computer (14);
**characterised in that** the system further comprises:
means for determining a location of the source computer (14) by comparing attributes associated with the packet with data drawn from a source profile database; and
means for determining the access rights of the source computer (14) based at least upon the determined location of the source computer (14), wherein access rights define the rights of the source computer (14) to access a requested network destination on the computer network (20), the access rights being determined without requiring interactive steps by a computer user.

9. The system of claim 8, wherein the location is a room in a hotel.

10. The system of claim 8, wherein means for determining a location of the source computer (14) comprises means for accessing a remote authentication dial-in user service (RADIUS).

11. The system of claim 8, wherein means for determining a location of the source computer (14) comprises means for accessing a lightweight directory access protocol (LDAP) database.

12. The system of claim 8, further comprising means for updating the source profile database when a new source accesses the computer network (20).

13. The system of claim 8, further comprising means for maintaining in the source profile database a historical log of the source computer (14)'s access to the computer network (20).

14. The system of claim 8, further comprising means for redirecting the source computer to a portal page prior to the source computer being allowed access to the requested network.

## Patentansprüche

1. Verfahren zur Zugangskontrolle zu einem Netzwerk mit den Schritten:
ein Wunsch von einem Quellencomputer (14) nach Zugang zu einem Computernetzwerk (20) wird an einem Tor (12) empfangen,
über das Tor wird dem Quellencomputer (14) Zugang zu dem Computernetzwerk (20) erlaubt,
an dem Tor (12) wird ein vom Quellencomputer (14) abgeschicktes Paket empfangen,
**gekennzeichnet durch die weiteren Schritte:**
ein Ort des Quellencomputers (14) wird bestimmt **durch** Vergleichen von dem Paket zugeordneten Eigenschaften mit aus einer Quellenprofildatei entnommenen Daten und
Zugangsrechte des Quellencomputers (14) werden bestimmt auf Grundlage mindestens des bestimmten Ortes des Quellencomputers, wobei die Zugangsrechte Rechte des Quellencomputers (14) auf Zugang zu einem gewünschten Netzbestimmungsort des Computernetzes (20) definieren und
bestimmt werden, ohne dass interaktive Schritte **durch** einen Computernutzer erforderlich sind.

2. Verfahren nach Anspruch ein, bei welchem der Ort ein Raum in einem Hotel ist.

3. Verfahren nach Anspruch 1, bei welchem die Bestimmung eines Ortes des Quellencomputers (14) den Zugriff auf einen entfernten Autentizierungs-Einwähl-Benutzerservice (RADIUS) umfasst.

4. Verfahren nach Anspruch 1, bei welchem die Bestimmung eines Ortes des Quellencomputers (14) den Zugriff auf eine Lightweightdirectory-Zugangsprotokoll(LDAP)Datenbank umfasst.

5. Verfahren nach Anspruch 1, bei welchem die Quellenprofildatei bei Zugriff einer neuen Quelle auf das Computernetzwerk (20) aktualisiert wird.

6. Verfahren nach Anspruch 1, bei welchem weiterhin in der Quellenprofildatei eine frühere Notiz über einen Zugang des Quellencomputers (14) zu dem Computernetzwerk (20) gespeichert wird.

7. Verfahren nach Anspruch 1, bei welchem ferner der Quellencomputer zu einer Portalseite umgeleitet wird, ehe er Zugriff zu dem gewünschten Netzwerk erhält.

8. System zur Zugangskontrolle zu einem Netzwerk mit:
einer Einrichtung, welche an einem Tor (12) einen Wunsch eines Quellencomputers (14) nach Zugriff auf ein Computernetzwerk (20) empfängt,
einer Einrichtung, welche über das Tor dem Quellencomputer (14) Zugriff auf das Computernetzwerk (20) erlaubt,
einer Einrichtung, welche an dem Tor (12) ein vom Quellencomputer (14) abgeschicktes Paket empfängt,
**dadurch gekennzeichnet, dass das System ferner enthält:**
eine Einrichtung zur Bestimmung eines Ortes des Quellencomputers (14) durch Vergleichen von dem Paket zugehörigen Eigenschaften mit aus einer Quellenprofildatei entnommenen Daten,
einer Einrichtung zur Bestimmung der Zugangsrechte des Quellencomputers (14) aufgrund mindestens des festgestellten Ortes des Computers (14), wobei die Zugriffsrechte die Rechte des Quellencomputers (14) auf Zugriff zu einem gewünschten Netzwerkzielort des Computernetzwerks (20) definieren und bestimmt werden, ohne dass interaktive Schritte durch einen Computernutzer erforderlich sind.

9. System nach Anspruch 8, bei welchem der Ort ein Raum in einem Hotel ist.

10. System nach Anspruch 8, bei welchem die Einrichtung zur Bestimmung eines Ortes des Quellencomputers (14) eine Einrichtung zum Zugriff auf einen entfernten Autentizierungs-Einwähl-Benutzerservice (RADIUS) aufweist.

11. System nach Anspruch 8, bei welchem die Einrichtung zur Bestimmung eines Ortes des Quellencomputers (14) eine Einrichtung zum Zugreifen auf eine Lightweightdirectory-Zugangsprotokoll(LDAP)Datenbank umfasst.

12. System nach Anspruch 8, weiterhin mit einer Einrichtung zur Aktualisierung der Quellenprofildatei, wenn eine neue Quelle auf das Computernetzwerk (20) zugreift.

13. System nach Anspruch 8, weiterhin mit einer Einrichtung zur Speicherung einer früheren Notiz über einen Zugriff des Quellencomputers (14) auf das Computernetzwerk (20) in der Quellenprofildatei.

14. System nach Anspruch 8, weiterhin mit einer Einrichtung zur Umleitung des Quellencomputers zu einer Portalseite, ehe der Quellencomputer Zugriff zu dem gewünschten Netzwerk erhält.

## Revendications

1. Procédé de contrôle d'accès à un réseau, comprenant les étapes consistant à :
recevoir à un dispositif passerelle (12) une demande d'un ordinateur source (14) pour l'accès à un réseau d'ordinateurs (20) ;
permettre, par le biais du dispositif passerelle, à l'ordinateur source (14) d'accéder au réseau d'ordinateurs (20) ;
recevoir, au dispositif passerelle (12), un paquet transmis de l'ordinateur source (14) ;
**caractérisé en ce que** le procédé comprend en outre les étapes consistant à :
déterminer un emplacement de l'ordinateur source (14) en comparant des attributs associés au paquet à des données extraites d'une base de données de profils source ; et
déterminer les droits d'accès de l'ordinateur source (14) sur la base au moins de l'emplacement déterminé de l'ordinateur source (14), dans lequel les droits d'accès définissent les droits de l'ordinateur source (14) à accéder à une destination de réseau demandée sur le réseau d'ordinateurs (20), les droits d'accès étant déterminés sans nécessiter d'étapes interactives de la part d'un utilisateur d'ordinateur.

2. Procédé selon la revendication 1, dans lequel l'emplacement est une chambre d'hôtel.

3. Procédé selon la revendication 1, dans lequel la détermination de l'emplacement de l'ordinateur source (14) comprend l'accès à un service RADIUS (système utilisateur de numérotation d'authentification à distance).

4. Procédé selon la revendication 1, dans lequel la détermination d'un emplacement de l'ordinateur source (14) comprend l'accès à une base de données LDAP (protocole d'accès rapide à l'annuaire).

5. Procédé selon la revendication 1, comprenant en outre la mise à jour de la base de données de profils source lorsqu'une nouvelle source accède au réseau d'ordinateurs (20).

6. Procédé selon la revendication 1, comprenant en outre le maintien dans la base de données de profils source d'un historique des accès de l'ordinateur source (14) au réseau d'ordinateurs (20).

7. Procédé selon la revendication 1, comprenant en outre la redirection de l'ordinateur source vers une page de portail avant d'autoriser l'accès de l'ordinateur source au réseau demandé.

8. Système de contrôle d'accès à un réseau, comprenant :
un moyen pour recevoir à un dispositif passerelle (12) une demande d'un ordinateur source (14) pour l'accès à un réseau d'ordinateurs (20) ;
un moyen pour permettre, par le biais du dispositif passerelle, à l'ordinateur source (14) d'accéder au réseau d'ordinateurs (20) ;
un moyen pour recevoir, au dispositif passerelle (12), un paquet transmis de l'ordinateur source (14) ;
**caractérisé en ce que** le système comprend en outre :
un moyen pour déterminer un emplacement de l'ordinateur source (14) en comparant des attributs associés au paquet à des données extraites d'une base de données de profils source ; et
un moyen pour déterminer les droits d'accès de l'ordinateur source (14) sur la base au moins de l'emplacement déterminé de l'ordinateur source (14), dans lequel les droits d'accès définissent les droits de l'ordinateur source (14) à accéder à une destination de réseau demandée sur le réseau d'ordinateurs (20), les droits d'accès étant déterminés sans nécessiter d'étapes interactives de la part d'un utilisateur d'ordinateur.

9. Système selon la revendication 8, dans lequel l'emplacement est une chambre d'hôtel.

10. Système selon la revendication 8, dans lequel le moyen pour déterminer un emplacement de l'ordinateur source (14) comprend l'accès à un service RADIUS (système utilisateur de numérotation d'authentification à distance).

11. Système selon la revendication 8, dans lequel le moyen pour déterminer un emplacement de l'ordinateur source (14) comprend l'accès à une base de données LDAP (protocole d'accès rapide à l'annuaire).

12. Système selon la revendication 8, comprenant en outre un moyen pour mettre à jour la base de données de profils source lorsqu'une nouvelle source accède au réseau d'ordinateurs (20).

13. Système selon la revendication 8, comprenant en outre un moyen pour maintenir dans la base de données de profils source un historique des accès de l'ordinateur source (14) au réseau d'ordinateurs (20).

14. Système selon la revendication 8, comprenant en outre un moyen pour rediriger l'ordinateur source vers une page de portail avant d'autoriser l'accès de l'ordinateur source au réseau demandé.
